(19) Europäisches Patentamt
European Patent Office
Office européen des brevets

(11) **EP 1 946 510 B1**

(12) **FASCICULE DE BREVET EUROPEEN**

(45) Date de publication et mention
de la délivrance du brevet:
**29.07.2015 Bulletin 2015/31**

(51) Int Cl.:
*H04L 27/26* (2006.01)        *H01Q 3/22* (2006.01)
*H04B 1/69* (2011.01)

(21) Numéro de dépôt: **06819389.5**

(22) Date de dépôt: **10.11.2006**

(86) Numéro de dépôt international:
**PCT/EP2006/068332**

(87) Numéro de publication internationale:
**WO 2007/054559 (18.05.2007 Gazette 2007/20)**

(54) **Système de communication ultra large bande à antenne dispersive pilotée en fréquence**

Ultrabreitband-Kommunikationssystem mit einer frequenzgesteuerten dispersiven Antenne

Ultra-broadband communication system provided with a frequency controlled dispersive antenna

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **10.11.2005 FR 0511456**

(43) Date de publication de la demande:
**23.07.2008 Bulletin 2008/30**

(73) Titulaire: **THALES**
**92200 Neuilly sur Seine (FR)**

(72) Inventeur: **QUAGLIARO, Gilles**
**F-95240 Cormeilles En Parisis (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A1- 2005 232 134**

• **ANUJ BATRA ET AL: "Multi-band OFDM Physical Layer Proposal for IEEE 802.15 Task Group 3a", PROJECT: IEEE P802.15 WORKING GROUP FOR WIRELESS PERSONAL AREANETWORKS (WPANS), XX, XX, vol. P802.15-03/268r2, 10 November 2003 (2003-11-10), pages 1-69, XP002336997,**
• **YONG S K ET AL: "Space-frequency correlation model for multi antenna, multi-band OFDM in UWB communication systems", INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA, 6 June 2005 (2005-06-06), pages 520-524, XP010833848, DOI: 10.1109/IVS.2005.1505156 ISBN: 978-0-7803-8961-8**
• **SHIROMA G ET AL: "A Combined Distributed Amplifier/True-Time-Delay Phase Shifter for Broadband Self-Steering Arrays", 2005 IEEE MTT-S INTERNATIONAL MICROWAVE SYMPOSIUM, PISCATAWAY, NJ, USA,IEEE, 12 June 2005 (2005-06-12), pages 403-406, XP010844752, DOI: 10.1109/MWSYM. 2005.1516613 ISBN: 978-0-7803-8846-8**

**Description**

L'invention concerne notamment un système de radiocommunication ultra large bande (en abrégé anglo-saxon UWB Ultra Large Bande) basé sur un modem OFDM (acronyme anglo-saxon de Orthogonal Frequency Division Multiplex) à étalement de spectre et une antenne dispersive pilotée en fréquence (en abrégé anglo-saxon FSA Frequency Scan Antenna).

Elle s'applique dans le domaine de la radiocommunication courte portée haut débit, de la radio-localisation, principalement en bande millimétrique.

La raréfaction du spectre disponible pour les communications pousse à l'utilisation de fréquences de plus en plus élevées.

Par ailleurs, devant l'expansion du réseau câblé (ADSL, fibres optiques), un service de radiocommunication se justifiera à l'avenir essentiellement par un besoin de mobilité.

La mobilité suppose l'omnidirectionalité du système antennaire. Malheureusement, la taille et donc la sensibilité énergétique d'une antenne omnidirectionnelle décroît avec la fréquence. Les très hautes fréquences sont donc par nature difficilement compatibles avec la mobilité, sauf à renoncer aux antennes omnidirectionnelles pour utiliser des antennes directives, la difficulté étant alors de pouvoir pointer celles-ci dynamiquement et de manière quasi-instantanée.

Trois solutions sont actuellement envisageables selon l'état de l'art.

L'antenne parabolique motorisée est la solution traditionnelle et bien connue. L'un de ces inconvénients est sa très faible agilité de pointage. Le pointage du faisceau, reposant sur une motorisation mécanique, n'est pas instantané. Elle se réserve à des configurations point à point et peu mobiles.

L'antenne à balayage électronique à déphaseur permet le pointage instantané, mais c'est une solution technologiquement difficile et au coût prohibitif. De plus, en configuration point à multipoint, elle impose d'utiliser un protocole à partage de temps de type TDMA (acronyme anglo-saxon de Time Division Multiple Access) qui n'est pas optimal en matière de latence dans le délai de transmission ou en matière d'allocation de puissance.

L'antenne dispersive FSA permet également le pointage instantané. C'est une technique éprouvée et à bas coût s'apparentant au prisme en optique. La direction de pointage dépend de la fréquence et la fréquence permet donc de contrôler la direction de pointage.

Le document intitulé « Multi-band OFDM Physical Layer Proposal for IEEE 802.15 Task Group 3a» PROJECT:IEEE P802.15 WORKING GROUP FOR WIRELESS PERSONAL AREANETWORKS (WPANS), vol.P802.15-03/268r2, 10 novembre 2003, pages 1-69 XP002336997 divulgue un procédé d'étalement de spectre base sur la technique OFDM comportant une étape où l'on augmente la durée d'un symbole OFDM en reproduisant un motif FFT pour générer une forme d'onde.

L'invention concerne notamment un équipement de radiocommunication comportant en combinaison au moins les éléments suivants : une antenne dispersive pilotée en fréquence ou frequency scanning antenna en liaison avec un modem UWB-OFDM adapté à générer une forme d'onde à base de modulation OFDM, en augmentant la durée d'un symbole OFDM par reproduction du motif de transformée de Fourier FFT.

Le modem utilise, par exemple, une séquence d'étalement de spectre de type DSSS.

L'invention concerne aussi un procédé d'étalement de spectre basé sur la technique OFDM utilisant un modem UWB-OFDM comportant au moins une étape où l'on augmente la durée d'un symbole OFDM en reproduisant le motif FFT pour générer une forme d'onde et l'on transmet cette forme d'onde à une antenne dispersive pilotée en fréquence, FSA, ou frequency scanning antenna.

On utilise, par exemple, un facteur d'étalement au moins égal à T*dF=2.

Le procédé applique par exemple une séquence DSSS sur la suite des motifs du symbole OFDM.

L'invention concerne aussi un procédé de radiocommunication comportant le procédé d'étalement de spectre décrit précédemment et au moins les étapes suivantes :

- transposer la forme d'onde dans une bande de fréquence adaptée à une antenne dispersive pilotée en fréquence donnée,
- émettre la forme d'onde vers un récepteur.

Le procédé comporte, par exemple, au moins les étapes suivantes :

- interroger en une seule fois avec un signal très large bande de type UWB-OFDM obtenu par mise en oeuvre des étapes listées précédemment,
- analyser spectralemement ledit signal reçu par le répondeur,
- repérer la position du répondeur par rapport à l'axe mécanique l'antenne de l'interrogateur et répondre en conséquence.

L'équipement comporte, par exemple, un interrogateur équipé d'une antenne dispersive en fréquence et d'un modem et un répondeur, ledit interrogateur est adapté à interroger un répondeur en émettant une forme d'onde générée par le procédé selon l'invention, ledit répondeur comprenant un moyen d'analyse spectrale du signal d'interrogation reçu et de détermination de la position du répondeur par rapport à l'axe mécanique de l'antenne dispersive pilotée en fréquence antenne dispersive pilotée en fréquence ou FSA de l'interrogateur en utilisant l'analyse spectrale.

La présente invention offre notamment comme avantages de fournir des équipements à bas coût, par exemple des équipements de radiocommunications, de radio identification et de radiolocalisation, avec le bénéfice des propriétés suivantes :

1 - un gain d'antenne dans toutes les directions de trafic,
2 - la possibilité de communications simultanées avec les terminaux fixes ou mobiles situés dans des directions différentes,
3 - une optimisation du partage de la puissance d'émission installée entre les différentes directions servies,
4 - une capitalisation des multitrajets ou une protection contre les multitrajets, et
5 - la possibilité d'effectuer une écartométrie angulaire avec relevé de distance.

D'autres caractéristiques et avantages de la présente invention apparaîtront mieux à la lecture de la description qui suit d'un exemple donné à titre illustratif et nullement limitatif annexé des figures qui représentent :

- La figure 1 un synoptique général du système selon l'invention,
- La figure 2 le schéma de principe d'une antenne FSA dispersive en fonction de la fréquence,
- La figure 3 un exemple de réalisation d'une antenne FSA dispersive en fonction de la fréquence,
- La figure 4 un symbole OFDM classique,
- La figure 5 un symbole OFDM étalé en fréquence,
- La figure 6 un symbole OFDM étalé en fréquence avec sur-modulation DSSS,
- La figure 7 le schéma d'une communication point à multipoint démontrant l'avantage d'un gain d'antenne dans toutes les directions de trafic,
- La figure 8 le schéma d'une communication point à multipoint démontrant la capacité de communications simultanées et de partage de la puissance optimal,
- La figure 9 un exemple de communication point à multipoint en présence de multitrajets, et
- La figure 10 un synoptique d'un système de radio-identification-localisation.

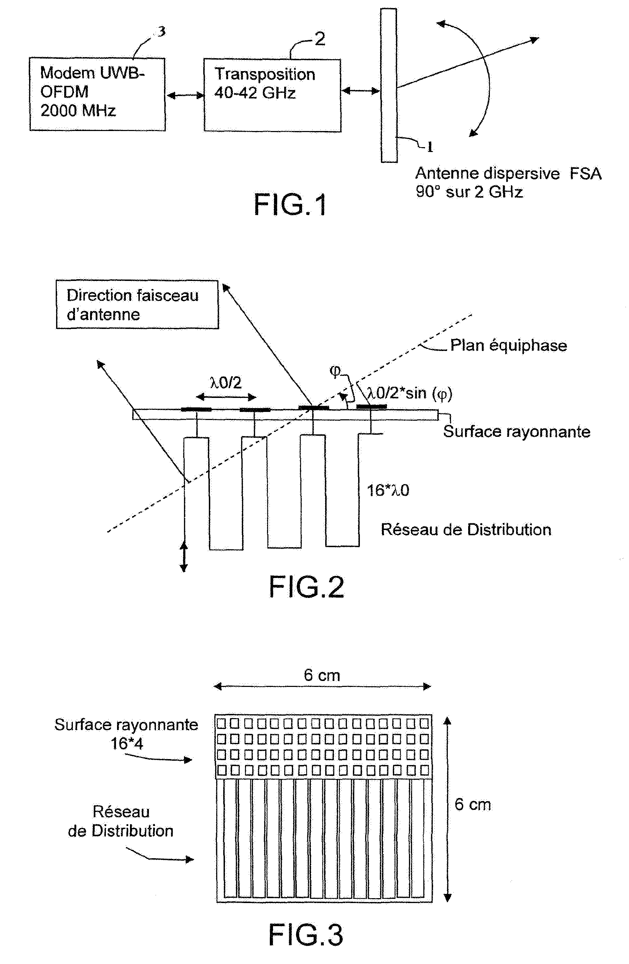

La figure 1 représente un synoptique du système selon l'invention. L'application est donnée à titre illustratif pour un système de radiocommunications en bande millimétrique à 40 GHz de type réseau radio local ou radio LAN (abréviation anglo-saxonne de Local Area Network) avec des portées typiques de 100 m à 1000m.

Sur la figure 1, on a représenté un système comprenant une antenne FSA, 1, un dispositif, 2, adapté à réaliser une transposition en fréquence et un modem, 3, de type UWB-OFDM à étalement de spectre selon l'invention.

Dans cet exemple, le modem 3 adresse une bande instantanée paramétrable jusqu'à 2000 MHz environ au travers d'une FFT de typiquement 64 à 256 points.

La transposition en fréquence est supposée porter la bande de trafic du modem entre 40 et 42 GHz pour le présent exemple.

La figure 2 donne un schéma synoptique de principe d'une antenne FSA. Les éléments rayonnants, espacés de $\lambda_0/2$ sur la face rayonnante de l'antenne, sont alimentés en série par des lignes longues, dans cet exemple de longueur $16\lambda_0$ ($\lambda_0$ étant la longueur d'onde dans le vide à la fréquence centrale $f_0$).

Dans ces conditions, le déphasage entre deux éléments rayonnants consécutifs à la fréquence de longueur d'onde $\lambda$ est égal à : $-(2\pi/\lambda)*(16\lambda_0) + 16*2*\pi$ (valeur entre $-\pi$ et $\pi$, nulle pour $\lambda=\lambda_0$)

Ce déphasage produit un dépointage angulaire du faisceau $\varphi$ tel que le déphasage entre deux éléments rayonnants consécutifs est égal à $(2\pi/\lambda)*(\lambda 0/2 *\sin(\varphi))$, valeur entre $-\pi$ et $\pi$, nulle pour $\varphi=0$.

L'égalité entre les deux expressions ci-dessus donne :

$$\sin(\varphi) = 32*(1-\lambda/\lambda_0) = 32*(f_0/f-1)$$

avec f et $f_0$, les fréquences correspondantes aux longueurs d'onde $\lambda$ et $\lambda_0$.

On constate que le faisceau est positionné dans l'axe à la fréquence centrale ($f_0$ prise dans cet exemple à 41 GHz) et se dépointe dès que l'on modifie la fréquence, par exemple :

Fréquence = 40 GHz φ= 53°
Fréquence = 41 GHz φ= 0°
Fréquence = 42 GHz φ= -50°

La longueur d'onde à 40 GHz est égale à 7,5 mm, la longueur électrique du circuit de distribution entre les éléments rayonnants est égale à 16*7,5 mm, soit 120 mm, ce qui est implantable après repliement sur un circuit d'un peu plus de 6 cm de côtés selon un schéma indiqué à la figure 3. La longueur électrique totale du circuit de distribution est de 15*120 mm, soit 1,8m. Une réalisation sous la forme de guides d'ondes en métal ou en plastique métallisé permet notamment de limiter les pertes radioélectriques.

La figure 3 montre un exemple de réalisation comportant une antenne dispersive FSA de type 16*4 éléments (patches) présentant une directivité dans l'axe de 22 dBi et un faisceau d'ouverture de 8 degrés environ en gisement et de 30 degrés en élévation (ouverture à 3 dB).

Avec 2000 MHz de bande instantanée, le modem adresse un secteur angulaire d'environ 103 degrés, soit environ 16 faisceaux consécutifs ce qui permet à la fois une discrimination angulaire et la disponibilité de 100 MHz de bande par direction pointée (capacité de 100 Mbps par direction).

**Modem à étalement de spectre UWB-OFDM**

Les antennes dispersives FSA nécessitent la manipulation de très larges bandes de fréquence, bien plus larges que le débit utile de trafic (dans notre exemple : 2000 MHz pour 100Mbps. Pour mettre en oeuvre le procédé selon l'invention on utilise par exemple la technologie UWB-OFDM.

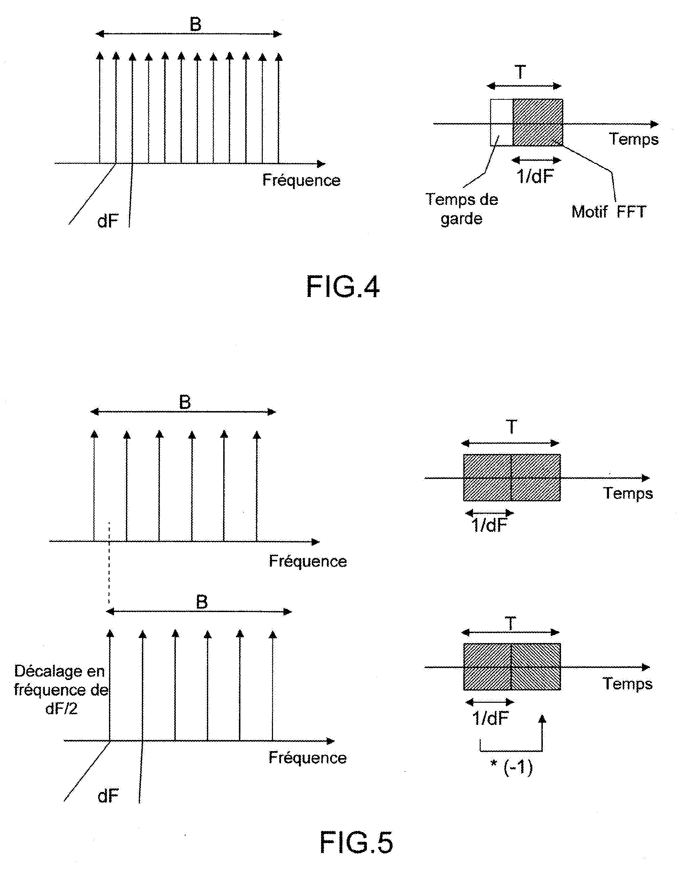

Pour rappel, la figure 4 explicite le principe de construction d'un symbole OFDM classique. Un symbole OFDM de durée T est constitué d'une série de porteuses régulièrement espacées en fréquence (dF) sur une bande B. Chaque porteuse est, par définition, une sinusoïde modulée par un coefficient amplitude-phase constant sur la durée du symbole, l'ensemble des valeurs amplitude-phase des porteuses individuelles constituant l'information transmise par le symbole. Par définition, un tel signal est périodique en temps avec une période 1/dF, le motif périodique étant le motif de FFT (FFT acronyme anglo-saxon de Fast Fourier Transform).

Pour obtenir un effet d'étalement de spectre selon l'invention, l'idée consiste à prolonger la durée T d'un symbole OFDM par une simple répétition à l'identique du motif de FFT (de durée 1/dF) autant que souhaité. Le convertisseur digital-analogique du modem travaille à la fréquence B en vertu du principe de Nyquist, les autres unités du modem pouvant travailler à fréquence réduite 1/T. Le spectre du symbole OFDM montre alors du « vide » entre chaque porteuse, et les symboles décalés en fréquence de n/T, n entier, 0<n<T*dF sont orthogonaux entre eux. Le coefficient T*dF peut être considéré comme un facteur étalement de spectre.

Ce principe est illustré par la figure 5 pour un facteur étalement T*dF=2 (En pratique, on prendra souvent des valeurs supérieures).

Chaque porteuse est modulable et démodulable individuellement, ce qui est important puisque chaque porteuse est destinée à servir des directions différentes selon l'invention.

La précision de synchronisation requise en temps pour la démodulation est en rapport avec la durée symbole T, et non pas 1/B, comme classiquement pour les modulations de bande B. Dans notre exemple, B=2000 MHz et 1/B=0,5 ns. Pour une FFT de 128 points, on a B/dF=128 et T=(T*dF)*128/B. Un coefficient étalement T*dF=2 donne T= 256/B= 128 ns. Un coefficient étalement de T*dF=16 donne une durée symbole T = 1024 ns qui est très manipulable.

On peut ainsi facilement dimensionner et implémenter un signal très large bande permettant d'utiliser l'antenne FSA, en utilisant un convertisseur numérique-analogique adapté.

On remarque sur la figure 5 que le symbole décalé de dF/2 comporte deux motifs FFT en opposition de phase, alors que le symbole non décalé comporte deux motifs FFT identiques.

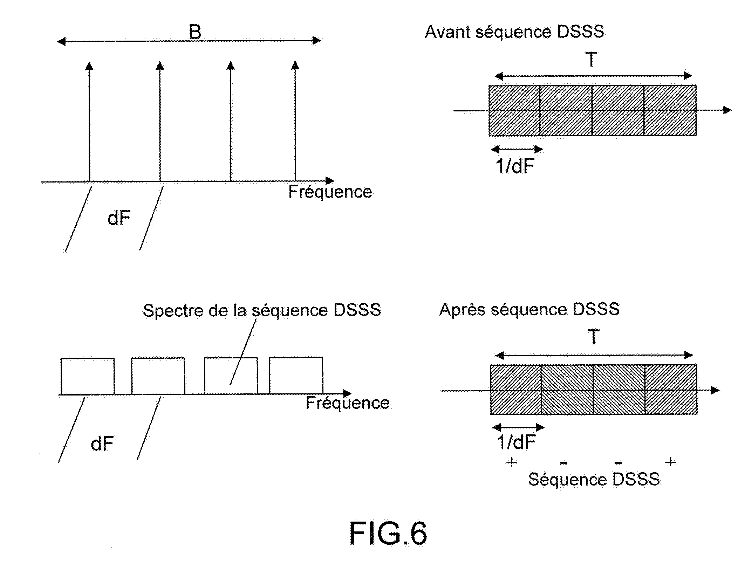

Ceci peut être généralisé en appliquant une séquence d'étalement de spectre DSSS (acronyme anglo-saxon de Direct Sequence Spread Spectrum) sur la suite des motifs FFT du symbole OFDM selon l'invention. La figure 6 représente un tel symbole pour un facteur d'étalement T*dF=4.

Chaque porteuse du spectre OFDM se voit modulée avec la même séquence DSSS et est donc modulable et dé-modulable individuellement, ce qui est important puisque chaque porteuse est destinée à servir une direction différente selon l'invention. Dans cet exemple d'application, on obtient une densité spectrale quasi-uniforme sur toute la bande B, et donc « discrète ».

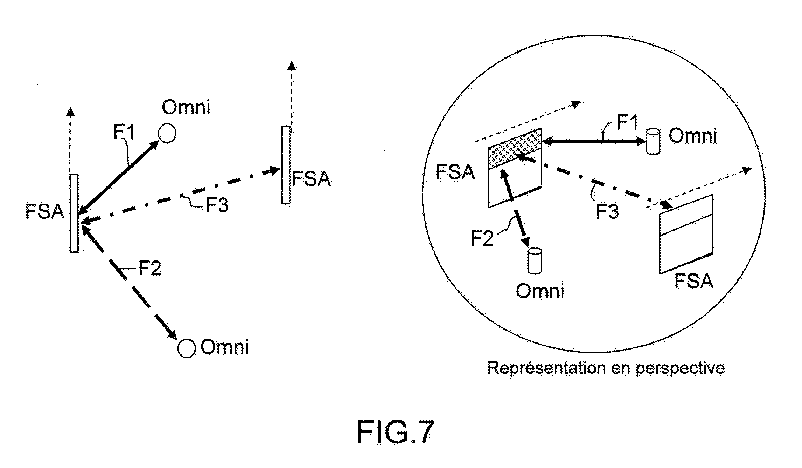

Les figures 7 à 10 donnent différents exemples d'application de l'invention et leurs avantages.

Gain d'antenne dans toutes les directions

La figure 7 représente une topologie réseau type d'un système selon l'invention comprenant des terminaux à antenne FSA et des terminaux à antenne omnidirectionnelle (avec une vue en perspective pour illustrer la position parallèle des antennes FSA). Les antennes FSA doivent être physiquement orientées dans la même direction, soit à l'installation, soit par un positionneur automatique piloté par un compas.

Pour mettre en exergue le bénéfice des antennes FSA, on peut s'appuyer sur le bilan de liaison chiffré suivant, en référence à l'exemple de réalisation déjà décrit :

| | | |
|---|---|---|
| Espace libre | | 92 DB/GHz/km |
| Distance | 100 m | -20dBkm |
| Fréquence | 41 GHz | 32dBGHz |
| Marge de « pluie » | 4 dB/km | 0,4 DB |
| **PROPAGATION** | | **105 DB** |
| | | |
| Largeur de bande | 2000 MHz | 33dBMHz |
| bruit | | 6dB |
| Pertes chaîne radio | | 2dB |
| C/N | Teb=10-6 | 6dB |
| Puissance transmise | | 14dBm |
| Valeur système | | **81 DB** |
| | | |
| **Gain cumulé pour l'antenne** | | **24 dBi** |
| | FSA ANTENNE GAIN | **19 dBi** |
| | OMNI ANTENNE GAIN | **5 dBi** |

D'après ce bilan de liaison chiffré, on déduit que :

1 - face à des terminaux équipés d'antenne omnidirectionnelle, le terminal équipé d'une antenne FSA peut transmettre en espace libre à 100 m une charge de trafic de 2000 Mbps (soit 20 directions différentes à 100 Mbps chacune),
2 - face à des terminaux équipés d'antenne FSA, sous réserve que celles-ci soient toutes alignées dans la même direction, le terminal équipé d'une antenne FSA peut transmettre en espace libre à 1000 m, une charge de trafic supérieure à 200 Mbps (soit 2 directions différentes à 100 Mbps),
3 - Les terminaux omnidirectionnels peuvent échanger entre eux des charges de trafic au mieux égales à 70 Mbps à 100m et 0,3 Mbps à 1000m.

<u>Communications simultanées avec les terminaux fixes ou mobiles situés dans des directions différentes.</u>

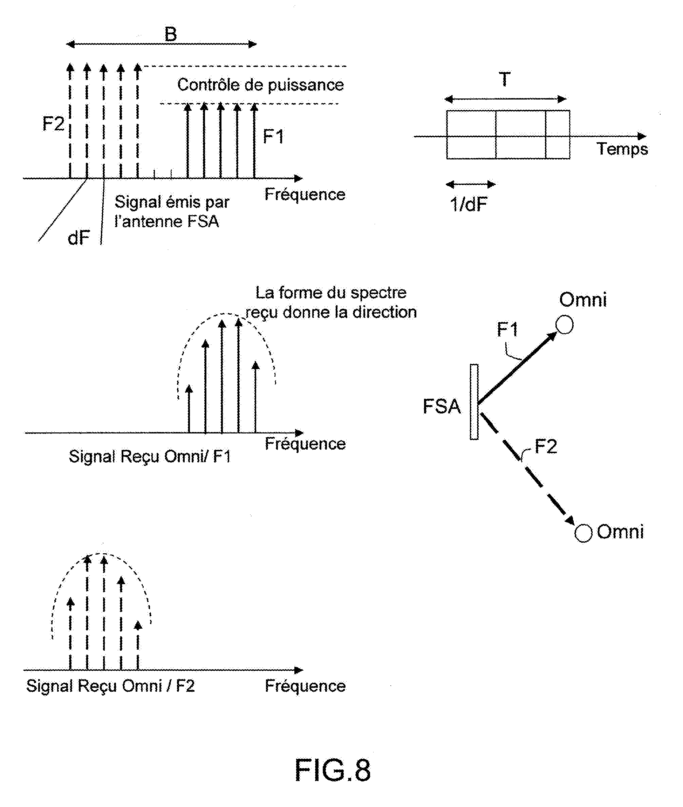

La figure 8 illustre le cas canonique d'une configuration point à multipoint. Le modem UWB-OFDM sert ici deux liaisons à la fois dans deux directions différentes, chacune dans sa bande de fréquence particulière en rapport avec sa direction, et donc de manière simultanée par multiplexage fréquenciel. Les porteuses correspondant à des directions inutilisées ne sont pas émises.

<u>Optimisation du partage de la puissance d'émission installée entre les différentes directions servies</u>

Sur la figure 8, les puissances d'émission sont ajustées de manière optimale pour chaque liaison, par simple pondération des porteuses individuelles du symbole OFDM. On peut ainsi donner plus de puissances aux liaisons le nécessitant (ici F2), en prenant sur les liaisons ayant de la marge de puissance (ici F1).

<u>Capitalisation et résistance vis à vis des multitrajets</u>

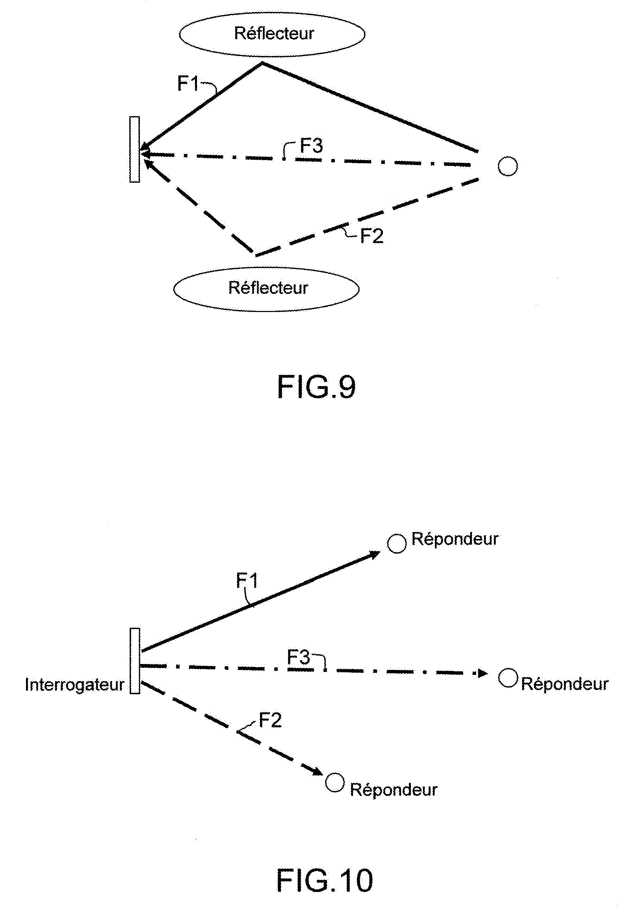

La figure 9 représente une topologie réseau où un terminal à antenne omnidirectionnelle est présenté à un terminal à antenne FSA en présence de réflecteurs naturels ou artificiels. Chaque réflexion correspondant à une direction différente, et donc une fréquence différente, chaque trajet de radio propagation, direct ou réfléchi, peut être servi indépendamment par multiplexage fréquentiel, permettant ainsi au système de capitaliser sur le meilleur.

La même configuration de la figure 9 avec 2 antennes FSA conduit à l'élimination des trajets par filtrage spatial au bénéfice du trajet direct, ce qui représente dans ce cas une protection défensive vis à vis des multitrajets.

Ecartométrie angulaire, radio-identification et radio-localisation

La figure 10 indique une configuration typique de radio-identification-localisation.

Un problème classique de la fonction radio-identification est la difficulté pour un « interrogateur » d'interroger un « répondeur » situé dans une direction précise sans avoir à « réveiller » ses voisins.

L'idée de l'invention consiste à interroger en une seule fois avec un signal très large bande de type UWB-OFDM obtenu par mise en oeuvre des étapes précédement décrites. Le signal d'interrogation reçu par le répondeur est analysé spectralement. Cette analyse spectrale permet au répondeur de repérer immédiatement sa position par rapport à l'axe mécanique de l'antenne FSA de l'interrogateur et donc de répondre en conséquence.

De cette fonction d'écartométrie découle une fonction de relèvement angulaire pouvant atteindre le 1/10e de faisceau (soit de 1 à 8 degrés dans notre exemple).

De plus, la bande instantanée de 100 MHz permet d'envisager un relèvement en distance de l'ordre du mètre.

Radiocommunication à très faible densité spectrale

En retenant la limitation de PIRE à -41.25 dBm/MHz définie par la FCC pour l'UWB dans la perspective d'une discrétion maximum, et en utilisant les antennes FSA de 20 dBi de gain en réception, la performance en débit accessible est de 20 Mbps à 10m et de 0,2Mbps à 100m. Ces performances n'auraient été que de 0,2 Mbps à 10m et 0,002 Mbps à 100m dans une conception UWB classique.

Sans sortir du cadre de l'invention, les étapes exposées ci-dessus sont applicables à d'autres fréquences, notamment chaque fois que l'on dispose d'une bande passante suffisante et de l'emplacement nécessaire pour loger l'antenne.

Un domaine d'application est le Wimax selon la norme 802.16e, notamment pour les aspects techniques avancés envisagés dans la norme 802.16e (en anglais, advanced radio techniques) en matière de diversité (en anglo-saxon, transmit and receive diversity), et en matière d'antenne intelligente (en anglais, smart antenna, adaptative antenna system). Un domaine d'application de choix pourrait être la bande de 40.5 GHz à 42.5 GHz.

Un autre domaine d'application est l'UWB dans la bande 3.1 à 10.6 GHz, telle que définie par la FCC et telle envisagée par l'organisation multibande OFDM comme sous la référence MBOA-SIG -multi band OFMD) pour les émissions à faible densité spectrale ne dépassant pas -41.25 dBm/MHz.

**Revendications**

1.  - Equipement de radiocommunication comportant en combinaison au moins les éléments suivants : au moins une antenne dispersive pilotée en fréquence (1) ou frequency scanning antenna en liaison avec un modem UWB-OFDM (3) adapté à générer une forme d'onde à base de modulation OFDM en augmentant la durée d'un symbole OFDM par reproduction du motif FFT.

2.  - Equipement selon la revendication 1, comportant au moins un modem utilisant une séquence DSSS.

3.  - Procédé d'étalement de spectre basé sur la technique OFDM, utilisant un modem UWB-OFDM et comportant au moins une étape où l'on augmente la durée d'un symbole OFDM en reproduisant le motif FFT pour générer une forme d'onde et l'on transmet cette forme d'onde à une antenne dispersive pilotée en fréquence ou frequency scanning antenna.

4.  - Procédé selon la revendication 3, utilisant un facteur d'étalement au moins égal à T*dF=2.

5.  - Procédé selon la revendication 3, dont on applique une séquence DSSS sur la suite des motifs du symbole OFDM.

6.  - Procédé selon la revendication 3 comportant le procédé d'étalement de spectre selon la revendication 3 et au moins les étapes suivantes :

    • transposer la forme d'onde dans une bande de fréquence adaptée à une antenne dispersive pilotée en fréquence ou frequency scanning antenna,
    • émettre la forme d'onde vers un récepteur.

7.  - Procédé selon la revendication 3 comportant au moins les étapes suivantes :

• interroger en une seule fois avec un signal très large bande de type UWB-OFDM obtenu par mise en oeuvre des étapes de la revendication 3,
• analyser spectralemement ledit signal reçu par le répondeur,
• repérer la position du répondeur par rapport à l'axe mécanique l'antenne de l'interrogateur et répondre en conséquence.

8. - Equipement de radiocommunication selon l'une des revendications 1 à 2 comportant un interrogateur équipé d'une antenne dispersive en fréquence et d'un modem et un répondeur, **caractérisé en ce que** ledit interrogateur est adapté à interroger un répondeur en émettant une forme d'onde générée par le procédé selon la revendication 3, ledit répondeur comprenant un moyen d'analyse spectrale du signal d'interrogation reçu et de détermination de la position du répondeur par rapport à l'axe mécanique de l'antenne dispersive pilotée en fréquence antenne dispersive pilotée en fréquence ou FSA de l'interrogateur en utilisant l'analyse spectrale.

**Patentansprüche**

1. Funkkommunikationsausrüstung, die in Kombination mindestens die folgenden Elemente aufweist: mindestens eine frequenzgesteuerte dispersive Antenne (1) oder Frequenzabtastantenne in Verbindung mit einem UWB-OFDM-Modem (3), das zur Erzeugung einer Wellenform auf OFDM-Modulationsbasis durch Verlängerung der Dauer eines OFDM-Symbols durch Reproduktion des FFT-Motivs ausgebildet ist.

2. Ausrüstung nach Anspruch 1, die mindestens ein Modem aufweist, das eine DSSS-Sequenz verwendet.

3. Verfahren zur Spreizung eine Spektrums basierend auf der OFDM-Technik, das ein UWB-OFDM-Modem verwendet und mindestens einen Schritt aufweist, bei dem die Dauer eines OFDM-Symbols durch Reproduktion des FFT-Motivs verlängert wird, um eine Wellenform zu erzeugen, und diese Wellenform an eine frequenzgesteuerte dispersive Antenne oder Frequenzabtastantenne weitergeleitet wird.

4. Verfahren nach Anspruch 3, das einen Spreizungsfaktor von mindestens gleich T*dF=2 verwendet.

5. Verfahren nach Anspruch 3, bei dem eine DSSS-Sequenz auf die Folge der Motive des OFDM-Symbols angewendet wird.

6. Verfahren nach Anspruch 3, das das Spektralspreizungsverfahren nach Anspruch 3 und mindestens die folgenden Schritte aufweist:

   • Übertragen der Wellenform in ein Frequenzband, das an eine frequenzgesteuerte dispersive Antenne oder Frequenzabtastantenne angepasst ist,
   • Senden der Wellenform an einen Empfänger.

7. Verfahren nach Anspruch 3, das mindestens die folgenden Schritte umfasst:

   • Abfragen in einem einzigen Mal mit einem sehr breitbandigen Signal vom Typ UWB-OFDM erhalten durch die Umsetzung der Schritte von Anspruch 3,
   • Spektralanalysieren des von dem Antwortgeber empfangenen Signals,
   • Ermitteln der Position des Antwortgebers im Verhältnis zur mechanischen Achse der Antenne des Abfragers und entsprechendes Antworten.

8. Funkkommunikationsausrüstung nach einem der Ansprüche 1 bis 2, die einen mit einer frequenzdispersiven Antenne und einem Modem ausgestatteten Abfrager und einen Antwortgeber aufweist, **dadurch gekennzeichnet, dass** der Abfrager imstande ist, einen Antwortgeber durch Senden einer gemäß dem Verfahren nach Anspruch 3 erzeugten Wellenform abzufragen, wobei der Antwortgeber ein Mittel für die Spektralanalyse des empfangenen Abfragesignals und für die Bestimmung der Position des Antwortgebers im Verhältnis zur mechanischen Achse der frequenzgesteuerten dispersiven Antenne oder FSA des Abfragers bei Verwendung der Spektralanalyse umfasst.

**Claims**

1. Radiocommunication equipment comprising, in combination at least the following elements: at least one frequency-controlled dispersive antenna (1) or frequency scanning antenna connected to a UWB-OFDM modem (3) adapted to generate an OFDM modulation-based waveform by increasing the duration of an OFDM symbol by reproducing the FFT pattern.

2. The equipment according to claim 1, comprising at least one modem using a DSSS sequence.

3. A method for spreading the spectrum based on the OFDM technique, using a UWB-OFDM modem and comprising at least one step in which the duration of an OFDM symbol is increased by reproducing the FFT pattern to generate a waveform and this waveform is transmitted to a frequency-controlled dispersive antenna or frequency scanning antenna.

4. The method according to claim 3, using a spread factor at least equal to T*dF=2.

5. The method according to claim 3, wherein a DSSS sequence is applied to the series of the patterns of the OFDM symbol.

6. The method according to claim 3 comprising the spectrum spreading method according to claim 3 and at least the following steps:

   • transposing the waveform into a frequency band adapted to a frequency-controlled dispersive antenna or frequency scanning antenna,
   • transmitting the waveform to a receiver.

7. The method according to claim 3 comprising at least the following steps:

   • interrogating just once with a very broad band UWB-OFDM-type signal obtained by implementing the steps of claim 3,
   • analysing spectrally said signal received by the transponder,
   • determining the position of the transponder relative to the mechanical axis of the antenna of the interrogator and responding consequently.

8. The radiocommunication equipment according to either of claims 1 to 2, comprising an interrogator fitted with frequency-controlled dispersive antenna and a modem and a transponder, **characterised in that** said interrogator is adapted to interrogate a transponder by transmitting a waveform generated by the method according to claim 3, said transponder comprising a means of spectrally analysing the interrogation signal received and of determining the position of the transponder relative to the mechanical axis of the frequency-controlled dispersive antenna or FSA of the interrogator using spectral analysis.

Modem UWB-OFDM 2000 MHz — 3

Transposition 40-42 GHz — 2

Antenne dispersive FSA 90° sur 2 GHz — 1

FIG.1

Direction faisceau d'antenne

Plan équiphase

$\varphi$

$\lambda 0/2$

$\lambda 0/2 \ast \sin (\varphi)$

Surface rayonnante

$16 \ast \lambda 0$

Réseau de Distribution

FIG.2

6 cm

Surface rayonnante 16*4

Réseau de Distribution

6 cm

FIG.3

B

dF

Fréquence

T

1/dF

Temps

Temps de
garde

Motif FFT

# FIG.4

B

Fréquence

dF

Décalage en
fréquence de
dF/2

B

Fréquence

T

1/dF

Temps

T

1/dF

* (-1)

Temps

# FIG.5

FIG.6

Omni

F1

FSA

F3

FSA

F2

Omni

EP 1 946 510 B1

FSA

F1

Omni

F3

F2

Omni

FSA

Représentation en perspective

FIG.7

B

Contrôle de puissance

F2

F1

dF

Signal émis par
l'antenne FSA

Fréquence

T

Temps

1/dF

La forme du spectre
reçu donne la direction

Omni

F1

Signal Reçu Omni/ F1

Fréquence

FSA

F2

Omni

Signal Reçu Omni / F2

Fréquence

FIG.8

FIG.9

FIG.10

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Multi-band OFDM Physical Layer Proposal for IEEE 802.15 Task Group 3a. *PROJECT:IEEE P802.15 WORKING GROUP FOR WIRELESS PERSONAL AREANETWORKS (WPANS),* 10 Novembre 2003, 1-69